# EUROPEAN PATENT SPECIFICATION

(11) **EP 1 804 402 B1**
(45) Date of publication and mention of the grant of the patent: **13.02.2008**
(21) Application number: 05111860.2
(22) Date of filing: 08.12.2005
(51) Int. Cl.: H04B 15/02, H04B 1/04, H04B 7/005

(54) **System and method for reducing radio frequency interference between a wireless communication device and a speaker**
Vorrichtung und Verfahren zur Verringerung von Störungen zwischen einem drahtlosen Gerät und einem Lautsprecher
Système et méthode pour réduire l'interférence radio entre un dispositif sans fil et un haut-parleur

(43) Date of publication of application: 04.07.2007
(73) Proprietor: Research In Motion Limited, Waterloo, Ontario N2L 3W8 (CA)
(72) Inventor: Griffin, Jason, Kitchener, Ontario N2P 2L3 (CA)
(74) Representative: Rickard, David John

(56) References cited:
- US-A- 5 917 812
- US-A- 6 122 500
- PATENT ABSTRACTS OF JAPAN vol. 2003, no. 12, 5 December 2003 (2003-12-05) & JP 2005 260535 A (MATSUSHITA ELECTRIC IND CO LTD), 22 September 2005 (2005-09-22)

## Description

The invention relates generally to the transmission of data to and from a wireless communication device and specifically for a system and method for reducing interference between the wireless device and a proximate speaker while doing so.

The advance of wireless communication networks has led to the proliferation of wireless communication devices that are used for the transfer of both voice and data. Personal Digital Assistants (PDAs) and smart-phones provide users with a device that enables them to communicate via voice communications, electronic mail (e-mail), Short Message Service (SMS) messages as well as instant messaging. Additionally, many of these devices also include web browsers and other applications that access a wide area network, such as the Internet, to provide the users with information.

However, when these devices transmit data they can cause noise to be heard on nearby speakers, such as radio speakers, computer speakers, speakerphones, and the like as a result of interference there between.

U.S. Patent 6,122,500 issued to Dent et al. describes techniques for reducing the effect of telephone transmissions on hearing aids. Specifically, designated transmission envelopes may be used for transmissions by authorized hearing aid users.

U.S. Patent 5,917,812 issued to Antonio et al. describes a system and method for reducing radio frequency (RF) interference by transmitting RF energy substantially continuously, rather than in burst transmission, thereby reducing RF interference associated therewith.

However, neither of the above described patents suggest ways to reduce RF interference without altering the transmission scheme.

J.P. Application 2005 260535 by Matsushita describes a speaker for shielding magnetic waves, thereby reducing electromagnetic interference and its associated buzz. However, this solution does not help existing speakers.

Accordingly, it can be seen that there is a need for a system and method that inhibits interference between a wireless device and a nearby speaker.

### GENERAL

In accordance with an aspect of the present invention there is preferably provided a method for reducing interference between a wireless communication device and a speaker, the method comprising the steps of: monitoring a microphone input for detecting noise created by the interference; and reducing a power transmission level of the wireless device from a standard power transmission level.

In accordance with a further aspect of the present invention, the method preferably further includes the steps of initiating a predefined event; monitoring the predefined event to determine when a predefined event threshold is reached; and returning the power transmission level of the wireless device to the standard power transmission level when said predefined event threshold is reached.

In accordance with yet a further aspect of the present invention there is preferably provided a wireless communication device configured to reduce interference with a speaker, the wireless communication device comprising: a noise detection unit configured to detect noise caused by the interference; and a power controller configured to reduce a power transmission level of the wireless device in response to the detection of noise by the noise detection unit.

In accordance with yet a further aspect of the present invention, the device preferably includes an event unit configured to trigger an event in response to the detection of noise by the noise detection unit; and an event monitor configured to detect when the triggered event reaches a predefined event threshold and instruct the power controller to return the power transmission level of the wireless device to the standard power transmission level.

In accordance with yet a further aspect of the present invention there is preferably provided a data storage device comprising instructions which, when executed on a wireless device, cause the wireless device to facilitate reduced interference with a speaker by implementing the steps of: monitoring a microphone input for detecting noise created by the interference; and reducing a power transmission level of the wireless device from a standard power transmission level.

### BRIEF DESCRIPTION OF THE DRAWINGS

Embodiments of the invention will now be described by way of example only with reference to the following drawings in which:
Figure 1 is a block diagram illustrating a situation with the potential for interference between a proximate wireless device and a speaker (prior art);
Figure 2 is block diagram of a wireless device;
Figure 3 is flow chart illustrating the operation of an embodiment of the invention; and
Figure 4 is a flow chart illustrating the operation of an alternate embodiment of the invention.

### DESCRIPTION OF PREFERRED EMBODIMENTS

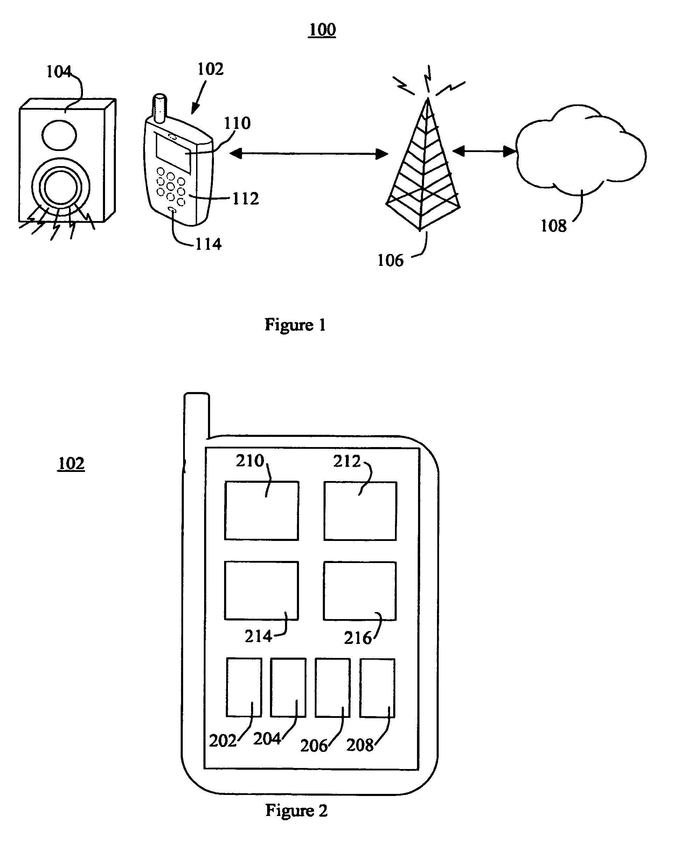

For convenience, like numerals in the description refer to like structures in the drawings. Referring to Figure 1, a sample environment in which interference exists between a wireless device and a speaker is illustrated generally by numeral 100. In the present example, a wireless device 102 is within close proximity of a speaker 104, such as a speakerphone for example. Further, the wireless device 102 is in communication with a communication network 108 via a transmission tower 106.

The wireless device 102 includes a display 110 for presenting information to the user and an input device 112, such as a touch screen, keypad, miniature keyboard, scroll bar or any combination thereof, for allowing the user to input data. The wireless device 102 further includes a microphone 114 for facilitating voice communication or voice commands and well as a built in speaker for facilitating audio output. These features are common in the art variations will be apparent to a person of ordinary skill in the art.

When the wireless device 102 transmits data to the communication network 108 via the transmission tower 106, noise is often emitted from the speaker 104. The volume of the noise and the duration for which it lasts depends on a number of factors including radio frequency (RF) shielding of the speaker 104, the distance between the speaker 104 and the wireless device 102, and the strength of the signal emitted by the wireless device 102.

Referring to Figure 2, a more detailed view of the wireless device 102 is illustrated. The wireless device 102 includes state of the components such as memory 202, a processor 204, a communication interface 206 and an input/output interface 208. A person of ordinary skill in the art will appreciate that different devices are configured in accordance with the required specification and are not limited to the components described herein.

As described with reference to Figure 1, noise may be a problem due to interference between the wireless device 102 and the speaker 104. Therefore, the wireless device 102 further includes a noise detection unit 210 configured to detect noise created by interference with the speaker 104. Specifically, the noise detection unit 210 is configured to use the microphone 114 to listen for noise. If noise is detected, a standard transmission power level used to transmit data from the handheld device 102 to the transmission tower 106 is reduced to a low transmission power level.

The wireless device 102 further includes an event unit 212 configured to implement a predefined event upon detection of noise by the noise detection unit 210. Further, an event monitor 214 is configured to return the transmission power level from the low transmission power level to the standard transmission power level in accordance with a predefined event threshold. A power level controller 216 is configured to adjust the power transmission level of the device as desired. Each of the noise detection unit 210, event unit 212, event monitor 214 and power level controller 216 can be implemented in hardware or software, or a combination thereof.

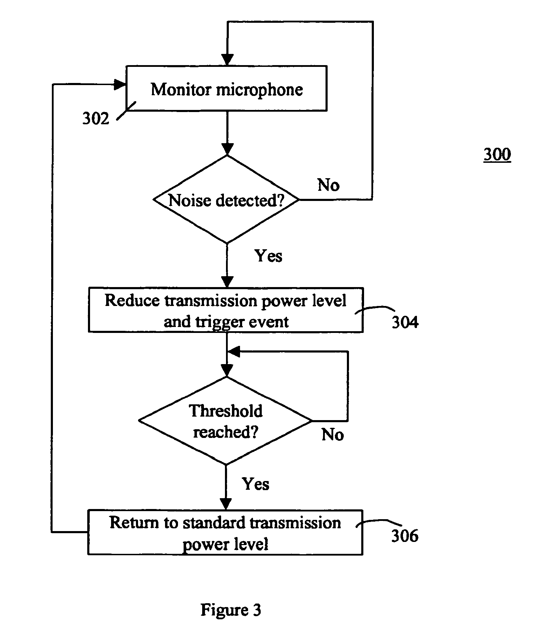

Referring to Figure 3, a flow chart illustrating operation of the present embodiment is represented generally by numeral 300.

In step 302 the noise detection unit 210 monitors the microphone 114 for noise caused by interference between the speaker 104 and the wireless device 102. Noise detection can be achieved using any one of a number of standard noise detection algorithms that is configured to identify the noise due to speaker interference. It will be appreciated by a person of ordinary skill in the art that different parameters of the noise detection algorithm may be configured differently depending on the implementation.

In the present embodiment, the noise detection unit 210 only monitors the microphone 114 when RF communication is occurring. It will be appreciated that in alternate embodiments, for example, the noise detection unit 210 can monitor the microphone 114 at all times, or only when the device 102 is receiving or transmitting data. If noise is detected, the operation continues at step 304, otherwise it remains at step 302.

In step 304, the standard transmission power level used to transmit data from the wireless device 104 to the transmission tower 106 is reduced to the low transmission power level for data transmission. The low transmission power level is configured to limit the interference with the speaker 104, and thereby limit the noise emitted there from.

Further, at step 304 an event is triggered and the event unit 212 is initiated. In the present embodiment, the event unit 212 is a timer. Depending on the implementation, the timer can be designed to count up or down. The operation then proceeds to step 306.

In step 306, the event monitor 214 returns the transmission power level to the standard transmission power level in accordance with the predefined event threshold. For example, in the present embodiment, the event monitor 214 monitors the timer until a predefined time has elapsed before returning the transmission power level to the standard transmission power level.

Accordingly, it will be apparent that for the duration in which the low power transmission level is applied, interference between the wireless device 102 and the speaker 104 is reduced. However, the reduction in transmission power may cause more transmission errors, which causes data retransmissions, or retries. Often the number of retries is sufficiently low that it is considered to be a worthwhile trade-off for the reduced interference. However, in some instances retries may be less desirable than others.

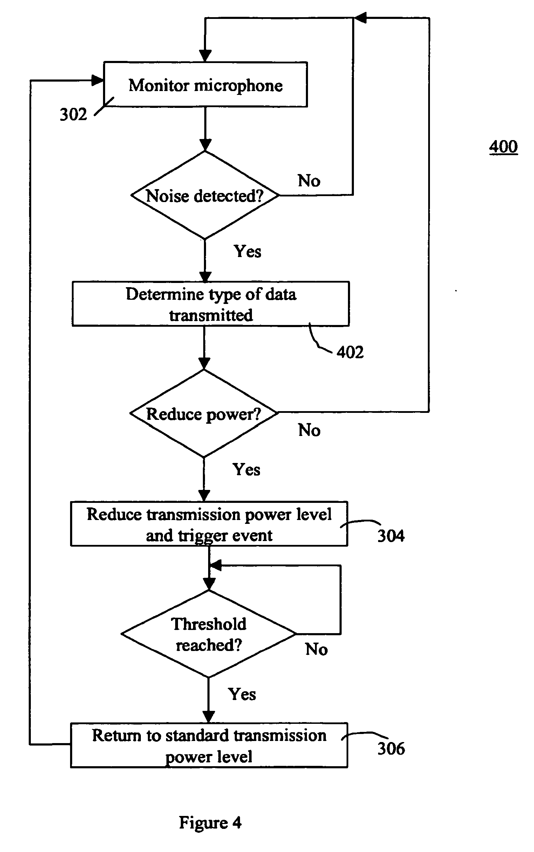

Referring to Figure 4, a flow chart illustrating an alternate embodiment of the present invention is illustrated generally by numeral 400. In the present embodiment, the wireless device determines the type of data being transmitted in order to minimize the number of retries in certain circumstances. Specifically, an additional step 402 is added between steps 302 and 304, described with reference to Figure 3.

In step 402, a data determination unit determines the type of data being transmitted from the wireless device 102 to the transmission tower 106. Although not shown in Figure 2, it will be appreciated that the data determination unit can be implemented on the device in hardware, software or a combination thereof.

If, for example, the data determination unit detects that the wireless device 102 is transmitting such as acknowledgements for incoming data then the potential increase in retries is a good compromise for the reduced interference and the operation continues at step 304. Other candidates for an acceptable increase in the number of retries include polling for e-mail or other data in a pull data environment.

Alternately, however, if the data determination unit determines that the type of data being transmitted from the wireless device 102 to the transmission tower 106 should use minimal retries, then the detection of interference is ignored, the transmission power level remains the same and the operation returns to step 302. Data that requires minimal transfers may include voice communication and e-mails or other data transfers initiated by the user. Further, applications may be assigned a Quality of Service (QoS) indicator to assist making the decision whether or not the power level can be reduced. Applications assigned a high QoS indicator would require a higher power level and applications assigned a low QoS indicator could tolerate a lower power level.

Optionally, the return to step 302 from step 402 is delayed in time to limit looping that may occur between steps 302 and 402. That is, if the operation returns immediately to step 302, the interference would once again be detected and the operation would return to step 402. At step 402, it would be determined that the power transmission level should not be reduced and the operation would return once again to step 302. This loop would continue until either one of the conditions changes, while using resources on the wireless device 102. Accordingly, if step 402 includes a delay before returning to step 302, the probability that one of the conditions has changed is increased, thereby reducing the use of the wireless device's resources.

The embodiments described above either transmit at a standard power transmission level or a low power transmission level. In an alternate embodiment, for some data it may be possible simply not to transmit anything to the communication network 108.
Therefore, rather than transmit at a low power transmission level, the wireless device 102 simply does not acknowledge the data at all so the communication network 108 retransmits the data to the wireless device 102 at a later point in time.

Further, in the embodiments described above, the event unit 212 is implemented as a timer. However, since the interference between wireless device 102 and the speaker 104 is related largely to their proximity, the event unit 212 may comprise a geospatial device such as accelerometer, global positioning system (GPS), motion sensors and the like. Optionally, the event unit 212 includes both the geospatial device and the timer in case the speaker 104 is in motion and the wireless device is stationary.

Therefore, at step 304, when the event is triggered and the event unit 212 is initiated, the geospatial device provides information relating to the position of the wireless device 102. For example, the GPS could provide the coordinates of the wireless device 102, while the accelerometer and motion sensor could determine motion.

At step 306, the event monitor 214 monitors the position of the wireless device 102 as determined by the geospatial device to determine a distance of which the wireless device 102 has moved. Once the device has moved further than a predefined distance threshold, the transmission power level is returned to the standard transmission power level and the operation returns to step 302. If the event unit 212 also includes the timer, the transmission power level is returned to the standard transmission power level and the operation returns to step 302 after a predefined time threshold has elapsed, even if the wireless device 102 does not move further than the predefined distance threshold.

The predefined distance threshold may be static and commonly defined for all circumstances. Alternately, the predefined distance threshold is dynamic and assigned in accordance with the volume of the detected noise. A greater volume of noise typically, although not necessarily, indicates greater interference between the wireless device 102 and the speaker 104. Accordingly, the greater the volume of detected noise, the larger the predefined distance threshold.

Similarly, the low transmission power level described above may either be static or dynamic. That is, one value may be used for the low transmission power level for all circumstances or a different value may be used for the low transmission power level depending upon the volume of the detected noise. As previously described, a greater volume of noise typically indicates greater interference between the wireless device 102 and the speaker 104. Accordingly, the greater the volume of detected noise, the lower the value selected for the low transmission power level.

Optionally, in the present embodiment the signal strength of the wireless device 102 is an additional factor used to determine the value for transmission power level. A strong signal strength would allow a relatively low transmission power level, whereas a weak signal strength would require a relatively high transmission power level.

Although the subject application refers specifically to the use of transmission towers 106 as an interface between the wireless device 102 and the communication network 108, any wireless communication interface may be used.

Further, although preferred embodiments of the invention have been described herein, it will be understood by those skilled in the art that variations may be made thereto without departing from the scope of the invention which is defined by the appended claims.

## Claims

1. A method for reducing interference between a wireless communication device (102) and a speaker (104), wherein the method comprises the steps of:
monitoring (302) a microphone input (114) for detecting noise created by the interference; and
reducing (304) a power transmission level of the wireless device (102) from a standard power transmission level.

2. The method of claim 1, further comprising the steps of:
initiating (304) a predefined event;
monitoring the predefined event to determine when a predefined event threshold is reached; and
returning (306) the power transmission level of the wireless device to the standard power transmission level when said predefined event threshold is reached.

3. The method of claim 1 or claim 2 further comprising the step of determining that data retransmissions are acceptable before reducing the power transmission level.

4. The method of claim 3, wherein the step of determining that data retransmissions are acceptable comprises interpreting a Quality of Service indicator.

5. The method of any one of claims 1 to 3, wherein the power transmission level is reduced to a low power transmission level.

6. The method of claim 1 or claim 2, wherein the power transmission level is reduced by not transmitting data from the wireless device (102).

7. The method of claim 2 or any one of claims 3 to 6 when dependent on claim 2, wherein the step of initiating the predefined event comprises starting a timer and the predefined event threshold is a predefined duration of time.

8. The method of claim 2 or any one of claims 3 to 7 when dependent on claim 2, wherein the step of initiating the predefined event comprises determining a geospatial position of the wireless device and the predefined event threshold is a predefined distance travelled.

9. The method of claim 8 wherein the geospatial position and predefined distance travelled are determined using any one or a combination of an accelerometer, global positioning system, and a motion sensor.

10. A wireless communication device (102) configured to reduce interference with a speaker, wherein the wireless communication device comprises:
a noise detection unit (210) configured to detect noise caused by the interference; and
a power controller (216) configured to reduce a power transmission level of the wireless device in response to the detection of noise by the noise detection unit (210).

11. The device of claim 10 further comprising:
an event unit (212) configured to trigger an event in response to the detection of noise by the noise detection unit (210); and
an event monitor (214) configured to detect when the triggered event reaches a predefined event threshold and instruct the power controller (216) to return the power transmission level of the wireless device (102) to the standard power transmission level.

12. The device of claim 10 or claim 11 further comprising a data determination unit configured to determine if data retransmissions are acceptable before reducing the power transmission level.

13. The device of claim 12, wherein the data determination unit is configured to determine that data retransmissions are acceptable in accordance with a Quality of Service indicator.

14. The device of any one of claims 1 to 13, wherein the power controller (216) is configured to reduce the power transmission level to a low power transmission level.

15. The device of any one of claims 10 to 13, wherein the power controller (216) is configured to reduce the power transmission level by not transmitting data from the wireless device (102).

16. The device of claim 11 or any one of claims 12 to 15 when dependent on claim 11, wherein the event unit (212) comprises a timer and the predefined event threshold is a predefined duration of time.

17. The device of claim 11 or any one of claims 12 to 16 when dependent on claim 11, wherein the event unit (212) comprises a geospatial positioning device configured to determine a geospatial position of the wireless device and the predefined event threshold is a predefined distance travelled.

18. The device of claim 17 wherein the geospatial positioning device comprises any one or a combination of an accelerometer, global positioning system, and a motion sensor.

19. A data storage medium comprising instructions which, when executed on a wireless device (102), cause the wireless device (102) to facilitate reduced interference with a speaker by implementing the steps of any one of claims 1 to 9.

20. A wireless communication system comprising a plurality of the wireless communication devices (102) of any one of claims 10 to 18.

## Patentansprüche

1. Verfahren zur Verringerung von Störungen zwischen einem drahtlosen Kommunikationsgerät (102) und einem Lautsprecher, wobei das Verfahren die folgenden Schritte umfasst:
das Überwachen (302) eines Mikrofoneingangs (114) zur Erkennung von Geräusch, das durch die Störung erzeugt wird; und
das Verringern (304) eines Leistungsübertragungspegels des drahtlosen Geräts (102) ausgehend von einem standardmäßigen Leistungsübertragungspegel.

2. Verfahren gemäß Anspruch 1, das des Weiteren die folgenden Schritte umfasst:
das Initiieren (304) eines vordefinierten Ereignisses;
das Überwachen des vordefinierten Ereignisses zur Ermittlung, wann ein vordefinierter Ereignisschwellenwert erreicht ist; und
das Rückführen (306) des Leistungsübertragungspegels des drahtlosen Geräts zu dem standardmäßigen Leistungsübertragungspegel, wenn der vordefinierte Ereignisschwellenwert erreicht ist.

3. Verfahren gemäß Anspruch 1 oder Anspruch 2, des Weiteren umfassend den Schritt des Ermittelns, dass Datenneuübertragungen akzeptabel sind, bevor der Leistungsübertragungspegel verringert wird.

4. Verfahren gemäß Anspruch 3, wobei der Schritt des Ermittelns, dass Datenneuübertragungen akzeptabel sind, das Interpretieren eines Dienstgüteindikators umfasst.

5. Verfahren gemäß jedem der Ansprüche 1 bis 3, wobei der Leistungsübertragungspegel auf einen niedrigen Leistungsübertragungspegel verringert wird.

6. Verfahren gemäß Anspruch 1 oder Anspruch 2, wobei der Leistungsübertragungspegel verringert wird, indem keine Daten von dem drahtlosen Gerät (102) übertragen werden.

7. Verfahren gemäß Anspruch 2 oder jedem der Ansprüche 3 bis 6 bei Abhängigkeit von Anspruch 2, wobei der Schritt des Initiierens des vordefinierten Ereignisses das Starten eines Timers umfasst und der vordefinierte Ereignisschwellenwert eine vordefinierte Zeitdauer ist.

8. Verfahren gemäß Anspruch 2 oder jedem der Ansprüche 3 bis 7 bei Abhängigkeit von Anspruch 2, wobei der Schritt des Initiierens des vordefinierten Ereignisses das Ermitteln einer georäumlichen Position des drahtlosen Gerätes umfasst und der vordefinierte Ereignisschwellenwert eine vordefinierte zurückgelegte Distanz ist.

9. Verfahren gemäß Anspruch 8, wobei die georäumliche Position und die vordefinierte zurückgelegte Distanz ermittelt werden, indem eine der folgenden Einrichtungen oder eine Kombination davon verwendet wird: ein Beschleunigungsmesser, ein GPS (Global Positioning System) und ein Bewegungssensor.

10. Drahtloses Kommunikationsgerät (102), das zur Verringerung von Störungen mit einem Lautsprecher konfiguriert ist, wobei das drahtlose Kommunikationsgerät umfasst:
eine Geräuscherkennungseinheit (210), die zum Erkennen von Geräusch, das durch die Störung erzeugt wird, konfiguriert ist; und
einen Leistungsregler (216), der zum Verringern eines Leistungsübertragungspegels des drahtlosen Geräts als Reaktion auf das Erkennen von Geräusch durch die Geräuscherkennungseinheit (210) konfiguriert ist.

11. Gerät gemäß Anspruch 10, des Weiteren umfassend:
eine Ereigniseinheit (212), die zum Auslösen eines Ereignisses als Reaktion auf das Erkennen von Geräusch durch die Geräuscherkennungs-einheit (210) konfiguriert ist; und
einen Ereignismonitor (214), der zum Erkennen, wenn das ausgelöste Ereignis einen vordefinierten Ereignisschwellenwert erreicht hat, konfiguriert ist sowiezum Anweisen des Leistungsreglers (216), den Leistungsübertragungspegel des drahtlosen Geräts (102) zu dem standardmäßigen Leistungsübertragungspegel rückzuführen.

12. Gerät gemäß Anspruch 10 oder Anspruch 11, des Weiteren umfassend eine Datenermittlungseinheit, die zum Ermitteln, ob Datenneu-übertragungen akzeptabel sind, bevor der Leistungsübertragungspegel verringert wird, konfiguriert ist.

13. Gerät gemäß Anspruch 12, wobei die Datenermittlungseinheit zum Ermitteln, dass Datenneuübertragungen akzeptabel sind, entsprechend einem Dienstgüteindikator, konfiguriert ist.

14. Gerät gemäß jedem der Ansprüche 10 bis 13, wobei der Leistungsregler (216) zum Verringern des Leistungsübertragungspegels auf einen niedrigen Leistungsübertragungspegel konfiguriert ist.

15. Gerät gemäß jedem der Ansprüche 10 bis 13, wobei der Leistungsregler (216) zum Verringern des Leistungsübertragungspegels, indem keine Daten von dem drahtlosen Gerät (102) übertragen werden, konfiguriert ist.

16. Gerät gemäß Anspruch 11 oder jedem der Ansprüche 12 bis 15 bei Abhängigkeit von Anspruch 11, wobei die Ereigniseinheit (212) einen Timer umfasst und der vordefinierte Ereignisschwellenwert eine vordefinierte Zeitdauer ist.

17. Gerät gemäß Anspruch 11 oder jedem der Ansprüche 12 bis 16 bei Abhängigkeit von Anspruch 11, wobei die Ereigniseinheit (212) eine georäumliche Positionsbestimmungseinrichtung umfasst, die zum Ermitteln einer georäumlichen Position des drahtlosen Gerätes konfiguriert ist, und der vordefinierte Ereignisschwellenwert eine vordefinierte zurückgelegte Distanz ist.

18. Gerät gemäß Anspruch 17, wobei die georäumliche Positionsbestimmungseinrichtung eine der folgenden Einrichtungen oder eine Kombination davon umfasst: ein Beschleunigungsmesser, ein GPS (Global Positioning System) und ein Bewegungssensor.

19. Datenspeichermedium, das Anweisungen enthält, die bei ihrer Ausführung auf einem drahtlosen Gerät (102) bewirken, dass das drahtlose Gerät (102) eine verringerte Störung zwischen ihm und einem Lautsprecher ermöglicht, indem die Schritte gemäß jedem der Ansprüche 1 bis 9 implementiert werden.

20. Drahtloses Kommunikationssystem, umfassend eine Vielzahl der drahtlosen Kommunikationsgeräte (102) gemäß jedem der Ansprüche 10 bis 18.

## Revendications

1. Procédé pour réduire les interférences entre un dispositif de communication sans fil (102) et un haut-parleur (104), le procédé comportant les étapes suivantes :
surveiller (302) une entrée de microphone (114) pour détecter le bruit créé par les interférences ; et
réduire (304) un niveau de transmission de puissance du dispositif sans fil (102) à partir d'un niveau de transmission de puissance standard.

2. Procédé de la revendication 1, comportant en outre les étapes suivantes :
lancer (304) un événement prédéfini ;
surveiller l'événement prédéfini pour déterminer quand un seuil d'événement prédéfini est atteint ; et
faire revenir (306) le niveau de transmission de puissance du dispositif sans fil au niveau de transmission de puissance standard une fois ledit seuil d'événement prédéfini atteint.

3. Procédé de la revendication 1 ou 2 comprenant en outre l'étape consistant à déterminer que des retransmissions de données sont acceptables avant de réduire le niveau de transmission de puissance.

4. Procédé de la revendication 3 dans lequel l'étape qui consiste à déterminer que des retransmissions de données sont acceptables comprend l'interprétation d'un indicateur de Qualité de Service.

5. Procédé de l'une quelconque des revendications 1 à 3 dans lequel le niveau de transmission de puissance est réduit à un niveau faible de transmission de puissance.

6. Procédé de la revendication 1 ou 2 dans lequel le niveau de transmission de puissance est réduit en ne transmettant pas de données à partir du dispositif sans fil (102).

7. Procédé de la revendication 2, ou de l'une quelconque des revendications 3 à 6 lorsqu'elles dépendent de la revendication 2, dans lequel l'étape de lancement de l'événement prédéfini comprend le démarrage d'une minuterie et le seuil d'événement prédéfini est une durée prédéfinie.

8. Procédé de la revendication 2, ou de l'une quelconque des revendications 3 à 7 lorsqu'elles dépendent de la revendication 2, dans lequel l'étape de lancement de l'événement prédéfini comprend la détermination d'une position géospatiale du dispositif sans fil et le seuil d'événement prédéfini est une distance parcourue prédéfinie.

9. Procédé de la revendication 8 dans lequel la position géospatiale et la distance parcourue prédéfinie sont déterminées en utilisant un élément, ou une combinaison, des éléments suivants : accéléromètre, système de positionnement global et détecteur de mouvement.

10. Dispositif de communication sans fil (102) configuré pour réduire les interférences avec un haut-parleur, ledit dispositif de communication sans fil comportant :
une unité de détection de bruit (210) configurée pour détecter le bruit causé par les interférences; et
un gestionnaire de puissance (216) configuré pour réduire un niveau de transmission de puissance du dispositif sans fil en réaction à la détection de bruit par l'unité de détection de bruit (210).

11. Dispositif de la revendication 10 comprenant en outre :
une unité d'événement (212) configurée pour déclencher un événement en réaction à la détection de bruit par l'unité de détection de bruit (210) ; et
un moniteur d'événement (214) configuré pour détecter quand l'événement déclenché atteint un seuil d'événement prédéfini et ordonner au gestionnaire de puissance (216) de faire revenir le niveau de transmission de puissance du dispositif sans fil (102) au niveau de transmission de puissance standard.

12. Dispositif de la revendication 10 ou 11 comprenant en outre une unité de détermination de données configurée pour déterminer si des retransmissions de données sont acceptables avant de réduire le niveau de transmission de puissance.

13. Dispositif de la revendication 12, dans lequel l'unité de détermination de données est configurée pour déterminer que des données de retransmissions sont acceptables conformément à un indicateur de Qualité de Service.

14. Dispositif de l'une quelconque des revendications 1 à 13 dans lequel le gestionnaire de niveau de puissance (216) est configuré pour réduire le niveau de transmission de puissance à un niveau faible de transmission de puissance.

15. Dispositif de l'une quelconque des revendications 10 à 13 dans lequel le gestionnaire de puissance (216) est configuré pour réduire le niveau de transmission de puissance en ne transmettant pas de données à partir du dispositif sans fil (102).

16. Dispositif de la revendication 11, ou de l'une quelconque des revendications 12 à 15 lorsqu'elles dépendent de la revendication 11, dans lequel l'unité d'événement (212) comprend une minuterie et le seuil d'événement prédéfini est une durée prédéfinie.

17. Dispositif de la revendication 11, ou de l'une quelconque des revendications 12 à 16 lorsqu'elles dépendent de la revendication 11, dans lequel l'unité d'événement (212) comprend un dispositif de positionnement géospatial configuré pour déterminer une position géospatiale du dispositif sans fil et le seuil d'événement prédéfini est une distance parcourue prédéfinie.

18. Dispositif de la revendication 17 dans lequel le dispositif de positionnement géospatial comprend un élément ou une combinaison des éléments suivants :
accéléromètre, système de positionnement global et détecteur de mouvement.

19. Support de stockage de données comprenant des instructions qui, lors de leur exécution sur un dispositif sans fil (102), font que le dispositif sans fil (102) réduit les interférences avec un haut-parleur en implémentant les étapes de l'une quelconque des revendications 1 à 9.

20. Système de communication sans fil comprenant une pluralité de dispositifs de communication sans fil (102) de l'une quelconque des revendications 10 à 18.
